# EUROPÄISCHE PATENTANMELDUNG

(11) **EP 4 035 812 A1**
(43) Veröffentlichungstag der Anmeldung: **03.08.2022**
(21) Anmeldenummer: 22150294.1
(22) Anmeldetag: 05.01.2022
(51) Int. Cl.: B23B 35/00, B23B 41/12, B23B 51/10

(54) **VERFAHREN ZUR HERSTELLUNG EINER WERKSTÜCK-DURCHGANGSBOHRUNG SOWIE ENTGRATUNGSWERKZEUG**

(30) Priorität: 27.01.2021 DE 102021101738
(71) Anmelder: AUDI AG, 85045 Ingolstadt (DE); Audi Hungaria ZRT, 9027 Gyõr (HU)
(72) Erfinder: Kopton, Peter, 85092 Kösching (DE); Bugár, Attila, 9081 Gyorujbarat (HU)
(74) Vertreter: Bierschneider, Walter

(57) **Zusammenfassung**

Die Erfindung betrifft ein Verfahren zur Herstellung einer Werkstück-Durchgangsbohrung (7), mit einem Entgrat-Prozess, bei dem eine werkzeugabgewandte Bohrungsmündung (45) der Werkstück-Durchgangsbohrung (7) mit Hilfe zumindest einer Entgratschneide (13) eines Entgratwerkzeugs (9) entgratet wird. Erfindungsgemäß erfolgt ein Eintauchhub (N), in dem das Entgratwerkzeug (9) von der werkzeugzugewandten Bohrungsmündung (49) in Richtung werkzeugabgewandter Bohrungsmündung (45) in die Werkstück-Durchgangsbohrung (7) eingefahren wird. Zudem erfolgt ein gegenläufiger Entgrathub (A), in dem das Entgratwerkzeug (9) mit einer Entgrat-Drehzahl (n_{A}) in die werkzeugabgewandte Bohrungsmündung (45) eingefahren wird, so dass mittels der Entgratschneide (13) des Entgratwerkzeugs (9) ein Grat (14) an der werkzeugabgewandten Bohrungsmündung (45) nach bohrungsinnen gezogen und entgratet wird.

## Beschreibung

Die Erfindung betrifft ein Verfahren zur Herstellung einer Werkstück-Durchgangsbohrung nach dem Oberbegriff des Anspruches 1 sowie ein Entgratwerkzeug gemäß Anspruch 10.

Die Kurbelwelle einer Brennkraftmaschine eines Kraftfahrzeugs weist Hauptlager sowie Pleuellager, die über Ölbohrungen miteinander verbunden sind. Aufgrund geometrischer Gegebenheiten sind die Ölbohrungen über einen Verschnittwinkel zueinander schräggestellt. Die Ölbohrungen werden in einem Bohrprozess erzeugt, in dem zunächst eine erste Ölbohrung in die Kurbelwelle eingetrieben wird und anschließend eine zweite Ölbohrung in die Kurbelwelle eingetrieben wird, die in die erste Ölbohrung einmündet. An der werkzeugabgewandten Bohrungsmündung der zweiten Bohrung entsteht fertigungsbedingt ein Grat. Sofern sich der Grat im Fahrzeugbetrieb löst, kann dies zu einer Beschädigung der Brennkraftmaschine führen.

Vor diesem Hintergrund weist ein gattungsgemäßes Verfahren zur Herstellung einer solchen Kurbelwelle einen Entgrat-Prozess auf, bei dem eine werkzeugabgewandte Bohrungsmündung der zweiten Ölbohrung mit Hilfe eines Entgratwerkzeugs entgratet wird.

Aus der DE 10 2008 056 782 A1 ist eine Entgratreibahle bekannt. Aus der DE 10 2004 010 372 A1 ist ein Werkzeug zum Entgraten von Bohrungen bekannt.

Die Aufgabe der Erfindung besteht darin, ein Verfahren zur Herstellung einer Werkstück-Durchgangsbohrung bereitzustellen, bei der ein Entgrat-Prozess im Vergleich zum Stand der Technik fertigungstechnisch einfach realisierbar ist.

Die Aufgabe ist durch die Merkmale des Anspruches 1 oder 10 gelöst. Bevorzugte Weiterbildungen der Erfindung sind in den Unteransprüchen offenbart.

Die Erfindung geht allgemein von einem Verfahren zur Herstellung einer Werkstück-Durchgangsbohrung aus. Das Verfahren weist einen Entgrat-Prozessschritt auf, bei dem eine werkzeugabgewandte Bohrungsmündung der Werkstück-Durchgangsbohrung mit Hilfe eines Entgratwerkzeugs entgratet wird. Gemäß dem kennzeichnenden Teil des Anspruches 1 wird die Entgratung der werkzeugabgewandten Bohrungsmündung der Werkstück-Durchgangsbohrung wie folgt durchgeführt: In einen Eintauchhub wird das Entgratwerkzeug von der werkzeugzugewandten Bohrungsmündung in Richtung werkzeugabgewandte Bohrungsmündung in die Werkstück-Durchgangsbohrung eingefahren. Anschließend erfolgt ein gegenläufiger Entgrathub, in dem das Entgratwerkzeug mit einer Entgrat-Drehzahl in die werkzeugabgewandte Bohrungsmündung eingefahren wird, so dass mittels der Entgratschneide des Entgratwerkzeugs ein Grat an der werkzeugabgewandten Bohrungsmündung nach bohrungsinnen gezogen und entgratet wird.

In einer ersten Ausführungsvariante kann während des Eintauchhubs die Entgratschneide außer Spaneingriff mit der Bohrungswand der Werkstück-Durchgangsbohrung bleiben. Hierzu kann die Entgratschneide in einem Werkzeug-Grundkörper des Entgratwerkzeugs radial verstellbar gelagert sein, und zwar zwischen einer durchmesserkleinen Nichtgebrauchslage und einer durchmessergroßen Gebrauchslage. Im Eintauchhub ist die Entgratschneide in ihre durchmesserkleine Nichtgebrauchslage verstellt. Im Entgrathub ist die Entgratschneide in ihre durchmessergroße Gebrauchslage verstellt, in der die werkzeugabgewandte Bohrungsmündung entgratet wird.

Alternativ dazu kann am Ende des Eintauchhubs das Entgratwerkzeug um einen Radialversatz ausgesteuert werden. In diesem Fall kann im folgenden Entgrathub die Entgratschneide in einer Zirkularbewegung um die Bohrungsachse geführt werden, damit die Entgratschneide die werkzeugabgewandte Bohrungsmündung entgraten kann.

In einer zweiten Ausführungsvariante kann die Entgratschneide bereits während des Eintauchhubs in Spaneingriff mit der Bohrungswand der Werkstück-Durchgangsbohrung sein. In diesem Fall kann das Entgratwerkzeug im Eintauchhub in Richtung werkzeugabgewandte Bohrungsmündung in die Werkstück-Durchgangsbohrung eingetrieben werden. Dabei kann die Entgratschneide eine Nut, insbesondere Helixnut, in der Bohrungswand erzeugen, und zwar mit Nutauslauf an der werkzeugabgewandten Bohrungsmündung. Zur Erzeugung der Helixnut kann das Entgratwerkzeug mit einem Nuterzeugungs-Vorschub und mit einer damit synchronisierten Nuterzeugungs-Drehzahl eingetrieben werden. Im Anschluss an den Eintauchhub startet der Entgrathub mit ggf. anschließendem Aufbohrhub.

Nach erfolgter Entgratung wird das Entgratwerkzeug im Aufbohrhub aus der Werkstück-Durchgangsbohrung herausgezogen. Hierbei bohrt die in Aufbohr-Drehzahl rotierende Entgratschneide die Werkstück-Durchgangsbohrung bis auf den Außendurchmesser der Nut auf. Der Außendurchmesser der Nut entspricht dem Fertigungsdurchmesser der Durchgangsbohrung nach Abschluss des Aufbohrhubs. Von daher weist die Durchgangsbohrung nach Abschluss des Aufbohrhubs eine nutfreie, glattzylindrische Bohrungswand auf.

In einer technischen Umsetzung kann im Eintauchhub das Entgratwerkzeug mit seiner Entgratschneide über die werkzeugabgewandte Bohrungsmündung hinaus bis zu einem Umkehrpunkt bewegt werden. Im Umkehrpunkt dreht die Entgratschneide belastungsfrei. Im Anschluss an den Umkehrpunkt startet der Aufbohrhub.

Im Hinblick auf eine einfache Steuerung des Entgratwerkzeugs während des Entgrat-Prozessschrittes ist es bevorzugt, wenn sowohl im Eintauchhub als auch im Aufbohrhub das Entgratwerkzeug koaxial zur Bohrungsachse dreht. Die Drehrichtung im Eintauchhub und im Aufbohrhub sind identisch. Zudem können bevorzugt die Nuterzeugungs-Drehzahl und die Aufbohr-Drehzahl im Wesentlichen gleich sein.

Das erfindungsgemäß Verfahren ist speziell bei einem Werkzeug mit der nachfolgend beschriebenen Werkstück-Geometrie realisierbar. Demzufolge kann die werkzeugabgewandte Bohrungsmündung der Durchgangsbohrung in einer Werkstückebene liegen, die mit Bezug auf die Bohrungsachse um einen Verschnittwinkel schräggestellt ist. In diesem Fall verläuft die Bohrungsmündung im Querschnitt betrachtet zwischen einer axial vorragenden Scheitelstelle und einer axial zurückgesetzten Scheitelstelle ellipsenförmig. Zudem spannt an der axial vorragenden Scheitelstelle ein Randbereich der Bohrungsmündung mit der Bohrungswand einen stumpfen Materialwinkel auf, der größer als 90° ist. Speziell in diesem Fall ist an der axial vorragenden Scheitelstelle ausreichend tragendes Werkstück-Material bereitgestellt, wodurch dort eine Gratbildung vermieden wird. Demgegenüber spannt an der axial zurückgesetzten Scheitelstelle ein Randbereich der Bohrungsmündung mit der Bohrungswand einen spitzen Materialwinkel kleiner als 90° auf. Von daher ist an der zurückgesetzten Scheitelstelle in geringerem Maße tragendes Werkstück-Material bereitgestellt, wodurch die axial zurückgesetzte Scheitelstelle für Gratbildung anfällig ist. Im Verlauf der Bohrungsmündung von der axial vorragenden Scheitelstelle zur axial zurückgesetzten Scheitelstelle wird daher die gebildete Gratkontur stetig größer.

Bei der obigen speziellen Werkstück-Geometrie ist es bevorzugt, wenn der Nutauslauf der Nut, die während des Eintauchhubs erzeugt wird, unmittelbar im Bereich der axial vorragenden Scheitelstelle positioniert ist, da an der axial vorragenden Scheitelstelle mangels Grat keine Notwendigkeit zur Entgratung besteht. Eine solche Entgratung wäre am Nutauslauf nicht mehr möglich, da der Nutgrund bereits auf dem Fertigdurchmesser liegt und daher vom Entgratwerkzeug nicht mehr nach bohrungsinnen gezogen und entgratet werden kann.

Auf diese Weise wird trotz fehlendem Spaneingriff mit dem Nutgrund der Entgratschneide eine Gratfreiheit an der Bohrungsmündung gewährleistet.

Dem Entgrat-Prozessabschnitt ist ein Vorbohr-Prozessschritt vorgelagert. Im Vorbohr-Prozessschritt wird ein Bohrwerkzeug in das Werkstück eingetrieben, und zwar unter Bildung einer Durchgangs-Vorbohrung, deren Durchmesser kleiner als der Fertigdurchmesser nach erfolgtem Aufbohrhub. Im Vorbohr-Prozessschritt wird auf der werkzeugabgewandten Bohrungsmündung der Grat gebildet.

Nachfolgend wird die Werkzeuggeometrie des Entgratwerkzeugs beschrieben: demzufolge kann die Entgratschneide unmittelbar an der Werkzeugspitze angeordnet sein. Die Entgratschneide kann eine in Axialrichtung verlaufende Längs-Schneidkante aufweisen, die den Nutgrund der Nut erzeugt. Die Längs-Schneidkante kann an einer stirnseitigen Schneidenecke in eine stirnseitige Quer-Schneidkante übergehen. In gleicher Weise kann die Längs-Schneidkante an einer schaftseitigen Schneidenecke in eine schaftseitige Quer-Schneidkante übergehen. Die beiden Quer-Schneidkanten erzeugen die Nutflanken der Nut. Bevorzugt ist es, wenn die Längs-Schneidkante der Entgratschneide unmittelbar auf dem Fertigdurchmesser liegt.

Die schaftseitige Quer-Schneidkante der Entgratschneide erzeugt in Doppelfunktion nicht nur eine Nutflanke der Nut, sondern bewirkt zusätzlich die Entgratung der werkzeugabgewandten Bohrungsmündung.

Im Hinblick auf eine verkürzte Prozesszeitdauer des Aufbohrhubs ist es bevorzugt, wenn das Entgratwerkzeug zumindest eine Schälschneide aufweist. Mit Hilfe der Schälschneide kann bereits im Eintauchhub die Werkstück-Durchgangsbohrung teilweise bis auf den Fertigdurchmesser aufgebohrt werden. Hierzu kann die Schälschneide in Axialrichtung mit Abstand zur Werkzeugspitze bzw. zur Entgratschneide angeordnet sein, und zwar bevorzugt unter Zwischenlage eines durchmesserreduzierten Spanraums, über den Späne abtransportiert werden können.

Die Schälschneide kann eine sich axial erstreckende Längs-Schneidkante aufweisen. Diese liegt bevorzugt auf dem Fertigdurchmesser. Zudem kann die Längs-Schneidkante an einer stirnseitigen Schneidenecke in eine Quer-Schneidkante übergehen. Im Umkehrpunkt (das heißt vor dem Start des Aufbohrhubs) verbleibt die Schälschneide bohrungsinnen mit Abstand zur werkzeugabgewandten Bohrungsmündung.

Nachfolgend ist ein Ausführungsbeispiel der Erfindung anhand der beigefügten Figuren beschrieben.

Es zeigen:
- Fig. 1: eine Teilschnittdarstellung einer Kurbelwelle mit integrierten Ölbohrungen;

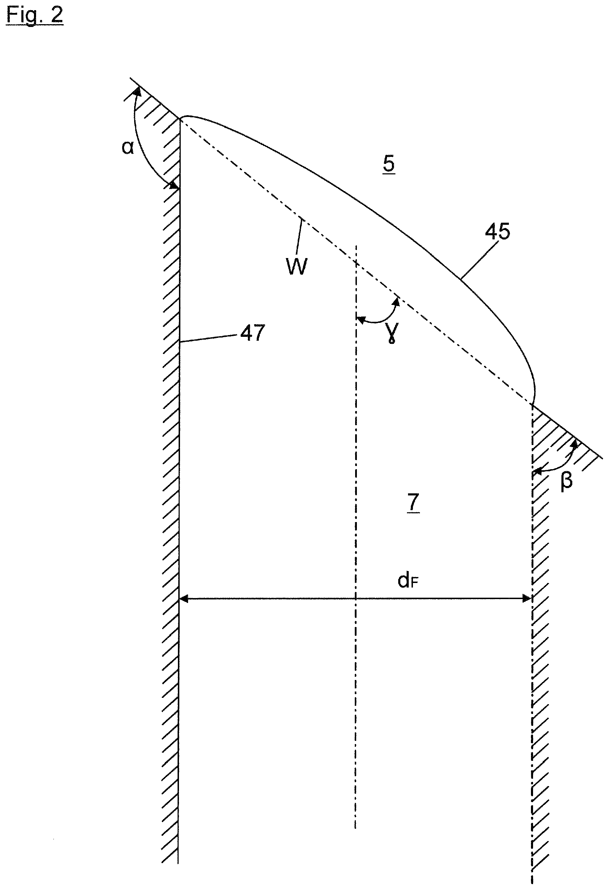

- Fig. 2: eine Detailansicht eines Bohrungsverschnitts zwischen den Ölbohrungen nach erfolgtem Entgrat-Prozessschritt;
- Fig. 3 und 4: ein Entgratwerkzeug in unterschiedlichen Ansichten; und
- Fig. 5 bis 8: Ansichten, anhand derer eine Prozessabfolge bei der Entgratung einer werkzeugabgewandten Bohrungsmündung einer der Ölbohrungen veranschaulicht ist.

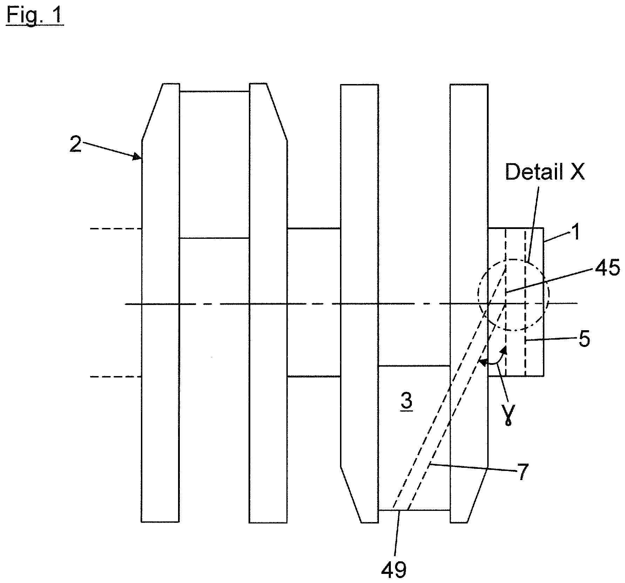

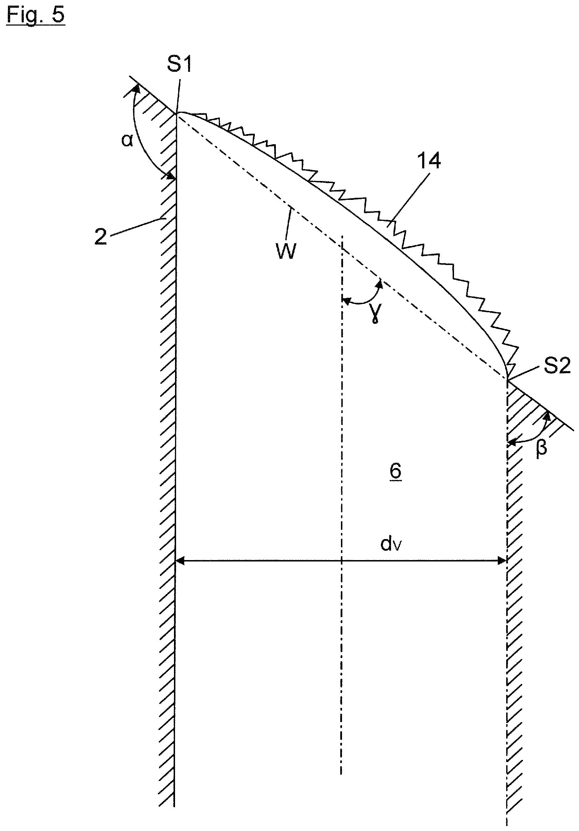

In der Figur 1 ist teilweise eine Kurbelwelle 2 einer Brennkraftmaschine eines Kraftfahrzeugs gezeigt, die ein Hauptlager 1, sowie ein Pleuellager 3 aufweist, die über Ölbohrungen 5, 7 miteinander verbunden sind. Die Ölbohrungen 5, 7 sind über einen Verschnittwinkel γ zueinander schräggestellt. In einem Vorbohrprozess wird zunächst die erste Ölbohrung 5 in der Kurbelwelle 2 erzeugt. Anschließend wird die zweite Ölbohrung 7 in der Kurbelwelle 2 erzeugt. Diese mündet an einer werkzeugabgewandten Bohrungsmündung 45 in die erste Ölbohrung 5 ein und weist in der Figur 1 eine werkzeugzugewandte Bohrungsmündung 49 auf. In dem obigen Vorbohrprozess kommt es an der werkzeugabgewandten Bohrungsmündung 45 zu Bildung von Grat 14 (Figuren 5 bis 7). Dieser wird in einem später beschriebenen Entgrat-Prozess (Figuren 5 bis 8) entfernt, so dass die werkzeugabgewandten Bohrungsmündung 45 vollständig gratfrei ausgebildet ist.

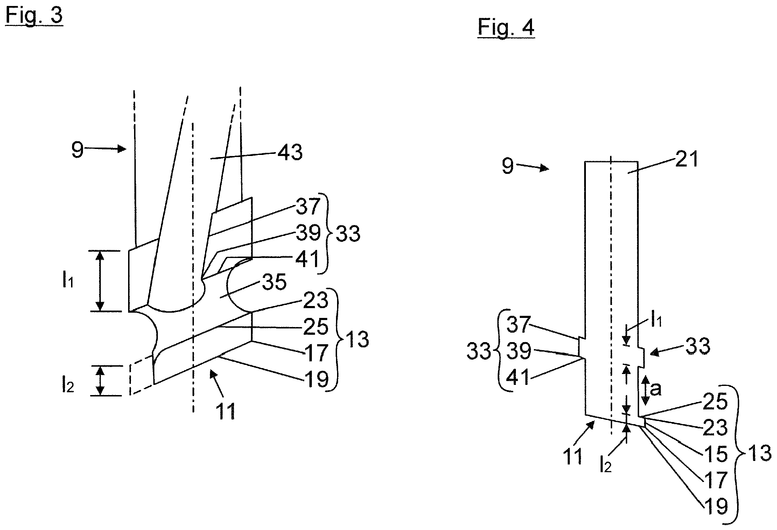

Der Entgrat-Prozess wird mit Hilfe eines in der Figur 3 oder 4 gezeigten Entgratwerkzeugs 9 durchgeführt. Nachfolgend ist die Werkzeuggeometrie des Entgratwerkzeugs 9 anhand der Figuren 3 und 4 beschrieben: Demnach ist an einer Werkzeugspitze 11 eine Entgratschneide 13 angeordnet. Die Entgratschneide 13 weist eine in Axialrichtung verlaufende Längs-Schneidkante 15 auf, die auf einem Fertigdurchmesser d_{F} der zweiten Ölbohrung 7 liegt. Die Längs-Schneidkante 15 geht an einer stirnseitigen Schneidenecke 17 in eine stirnseitige Quer-Schneidkante 19 über. In Richtung Spannschaft 21 geht die Längs-Schneidkante 15 der Entgratschneide 13 an einer schaftseitigen Schneidenecke 23 in eine schaftseitige Quer-Schneidkante 25 über. Mittels der Längs-Schneidkante 15 wird in einem später beschriebenen Eintauchhub N ein Nutgrund 27 einer Helixnut 29 erzeugt. Mit Hilfe der beiden Quer-Schneidkanten 19, 25 werden die Nutflanken 31 der Helixnut 27 erzeugt.

In Axialabstand a zur Werkzeugspitze 11 weist das Entgratwerkzeug 9 eine Schälschneide 33 auf. Zwischen der Schälschneide 33 und der Entgratschneide 13 verläuft ein durchmesserreduzierter ringförmiger Spanraum 35 (Figur 3). Die Schälschneide 33 weist eine sich axial erstreckende Längs-Schneidkante 37 auf. Diese liegt (wie auch die Längs-Schneidkante 15 der Entgratschneide 13) auf dem Fertigungsdurchmesser d_{F}. Die Längs-Schneidkante 37 geht an einer stirnseitigen Schneidenecke 39 in eine Quer-Schneidkante 41 über.

Wie aus der Figur 3 oder 4 hervorgeht, ist die Kantenlänge l₁ der Längs-Schneidkante 37 der Schälschneide 33 wesentlich länger bemessen als die Kantenlänge l₂ der Längs-Schneidkante 15 der Entgratschneide 13. Der Entgratschneide 13 ist in der Figur 3 in der Drehrichtung eine Spannut 43 zur Späneabfuhr vorgelagert. Diese erstreckt sich in Axialrichtung und mündet in Richtung Werkzeugspitze 11 in den Spanraum 35.

Nachfolgend wird anhand der Figuren 5 bis 8 eine Prozessabfolge im Entrat-Prozess: Demzufolge wird gemäß der Figur 5 die Kurbelwelle 2 zunächst in einem Vorbohrzustand bereitgestellt, in dem die Kurbelwelle 2 eine Vorbohrung 6 mit einem Vorbohrungsdurchmesser dᵥ aufweist, aus dem die zweite Ölbohrung 7 (nachfolgend als Durchgangsbohrung bezeichnet) hergestellt wird. mit ihrer werkzeugabgewandten Bohrungsmündung 45 in die erste Ölbohrung 5 mündet. Die werkzeugabgewandte Bohrungsmündung 45 der Vorbohrung 6 liegt in einer, in der Figur 5 angedeuteten Werkzeugebene W, die mit Bezug auf die Bohrungsachse B um einen Verschnittwinkel γ schräggestellt ist. Entsprechend verläuft die Bohrungsmündung 45, im Querschnitt betrachtet, zwischen einer axial vorragenden Scheitelstelle S1 und einer axial zurückgesetzten Scheitelstelle S2 ellipsenförmig. An der axial vorragenden Scheitelstelle S2 spannt ein Randbereich der Bohrungsmündung 45 mit der Bohrungswand 47 einen stumpfen Materialwinkel α größer als 90° auf. Entsprechend ist an der axial vorragenden Scheitelstelle S1 ausreichend tragendes Kurbelwellen-Material bereitgestellt, um im Bereich der axial vorragenden Scheitelstelle S1 eine Gratbildung zu vermeiden. Umgekehrt spannt an der axial zurückgesetzten Scheitelstelle S2 ein Randbereich der Bohrungsmündung 45 mit der Bohrungswand 47 einen spitzen Materialwinkel β kleiner als 90° auf. Von daher ist an der axial zurückgesetzten Scheitelstelle S2 nicht ausreichend tragendes Kurbelwellen-Material bereitgestellt. Die Bohrungsmündung 45 ist daher speziell an der axial zurückgesetzten Scheitelstelle S2 anfällig für Gratbildung. Dies spiegelt sich auch in dem in der Figur 5 gezeigten Vorbohrzustand wider: Demnach ist an der axial vorragenden Scheitelstelle S1 kein Grat 14 vorhanden. Der Grat 14 wird jedoch im Verlauf der Bohrungsmündung 45 in Richtung auf die zurückgesetzte Scheitelstelle S2 immer ausgeprägter.

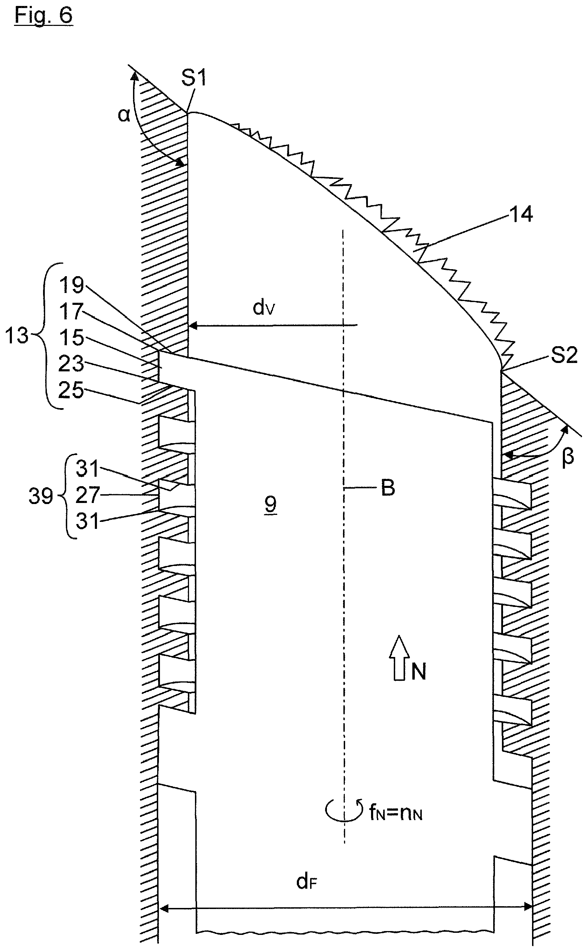

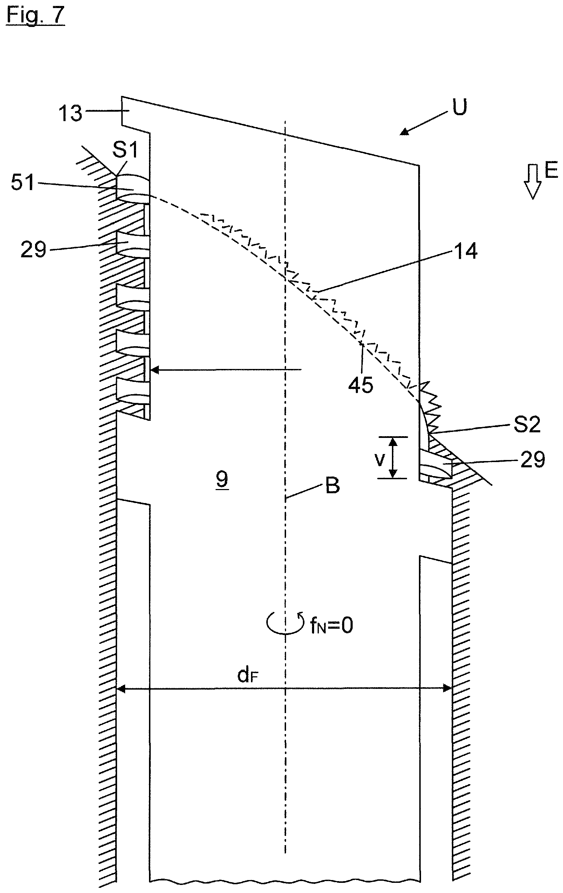

Im weiteren Prozessverlauf (Figur 6) wird das Entgratwerkzeug 9 ausgehend von der werkzeugzugewandten Bohrungsmündung 49 in Richtung auf die werkzeugabgewandte Bohrungsmündung 45 in die Werkstück-Durchgangsbohrung 7 eingetrieben, und zwar mit einem Nuterzeugungs-Vorschub f_{N} sowie mit einer damit synchronisierten Nuterzeugungs-Drehzahl n_{N}. Auf diese Weise erzeugt die Entgratschneide 13 des Entgratwerkzeugs 9 in der Bohrungswand 47 die bereits erwähnte Helixnut 29, bestehend aus dem Nutgrund 27 und den beiden Nutflanken 31. Im Eintauchhub N wird das Entgratwerkzeug 9 mit seiner Entgratschneide 13 bis über die werkzeugabgewandte Bohrungsmündung 45 hinaus bis zu einem Umkehrpunkt U bewegt (siehe Figur 7). Im Umkehrpunkt U ist die Entgratschneide 13 belastungsfrei. Wie aus der Figur 6 weiter hervorgeht, ist der Eintauchhub N so gestaltet, dass sich der Nutauslauf 51 im Bereich der axial vorragenden Scheitelstelle S1 befindet, an der es zu keiner Gratbildung kommt.

Mittels der Schälschneide 33 wird bereits im Eintauchhub N die Werkstück-Durchgangsbohrung 7 bis auf den Fertigdurchmesser d_{F} aufgebohrt. Im Umkehrpunkt U befindet sich die Schälschneide 33 bohrungsinnen mit Axialversatz v zur werkzeugabgewandten Bohrungsmündung 45 (siehe Figur 7).

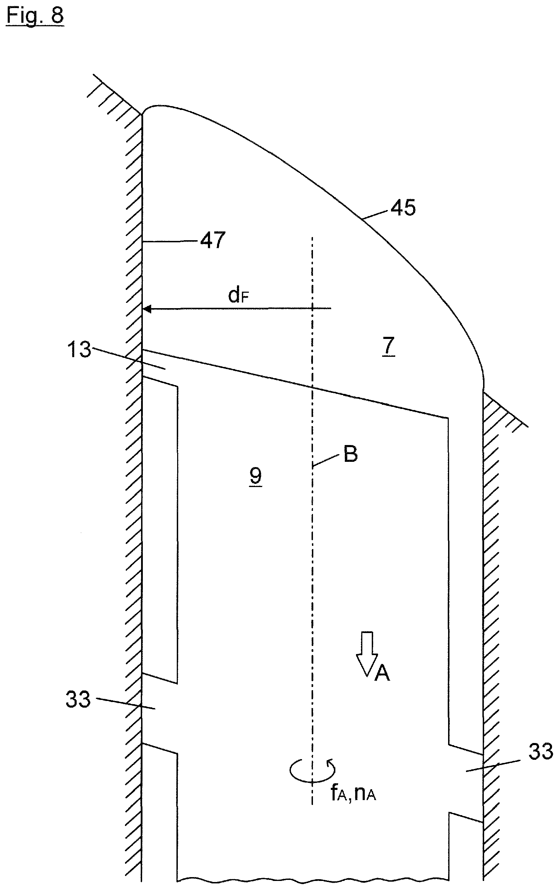

Am Umkehrpunkt (Figur 7) startet der Aufbohrhub A (Figur 8), bei dem das Entgratwerkzeug 9 mit gleicher Drehrichtung sowie einer Drehzahl n_{A} wieder aus der Durchgangsbohrung 7 herausgeführt wird. In diesem Fall bewirkt die schaftseitige Quer-Schneidkante 25 der Entgratschneide 13 die Entgratung der werkzeugabgewandten Bohrungsmündung 45. Gleichzeitig wird im Aufbohrhub A mit Hilfe der Entgratschneide 13 das noch verbleibende Materialaufmaß in der Durchgangsbohrung 7 mit Hilfe der Entgratschneide 13 abgetragen.

Die fertiggestellte Durchgangsbohrung 7 weist somit einen Fertigdurchmesser d_{F} auf. Ferner ist die Durchgangsbohrung 7 mit einer nutfreien, glattzylindrischen Bohrungswand 47 ausgebildet.

### BEZUGSZEICHENLISTE:

- 1: Hauptlager
- 2: Kurbelwelle
- 3: Pleuellager
- 6: Vorbohrung
- 5, 7: Ölbohrungen
- 9: Entgratwerkzeug
- 11: Werkzeugspitze
- 13: Entgratschneide
- 14: Grat
- 15: Längs-Schneidkante
- 17: stirnseitige Schneidenecke
- 19: stirnseitige Quer-Schneidkante
- 21: Spannschaft
- 23: schaftseitige Schneidenecke
- 25: schaftseitige Quer-Schneidkante
- 27: Nutgrund
- 29: Helixnut
- 31: Nutflanken
- 33: Schälschneide
- 35: Spanraum
- 37: Längs-Schneidkante
- 39: stirnseitige Schneidenecke
- 41: Quer-Schneidkante
- 43: Spannut
- 45: werkzeugabgewandte Bohrungsmündung
- 47: Bohrungswand
- 49: werkzeugzugewandte Bohrungsmündung
- 51: Nutauslauf
- B: Bohrungsachse
- W: Werkzeugebene
- A: Aufbohrhub
- N: Eintauchhub
- U: Umkehrpunkt
- α, β, γ: Winkel
- dv: Vorbohrungs-Durchmesser
- d_{F}: Fertigdurchmesser
- v: Axialversatz

## Patentansprüche

1. Verfahren zur Herstellung einer Werkstück-Durchgangsbohrung (7), mit einem Entgrat-Prozess, bei dem eine werkzeugabgewandte Bohrungsmündung (45) der Werkstück-Durchgangsbohrung (7) mit Hilfe zumindest einer Entgratschneide (13) eines Entgratwerkzeugs (9) entgratet wird, **gekennzeichnet durch** die folgenden Prozessschritte:
einen Eintauchhub (N), in dem das Entgratwerkzeug (9) von der werkzeugzugewandten Bohrungsmündung (49) in Richtung werkzeugabgewandter Bohrungsmündung (45) in die Werkstück-Durchgangsbohrung (7) eingefahren wird, und
einen gegenläufigen Entgrathub (A), in dem das Entgratwerkzeug (9) mit einer Entgrat-Drehzahl (n_{A}) in die werkzeugabgewandte Bohrungsmündung (45) eingefahren wird, so dass mittels der Entgratschneide (13) des Entgratwerkzeugs (9) ein Grat (14) an der werkzeugabgewandten Bohrungsmündung (45) nach bohrungsinnen gezogen und entgratet wird.

2. Verfahren nach Anspruch 1, **dadurch gekennzeichnet, dass** während des Eintauchhubs (N) die Entgratschneide (13) außer Spaneingriff mit der Bohrungswand (47) der Werkstück-Durchgangsbohrung (7) bleibt, und/oder dass die Entgratschneide (13) in einem Werkzeug-Grundkörper des Entgratwerkzeugs (9) radial verstellbar gelagert ist, und zwar zwischen einer durchmesserkleinen Nichtgebrauchslage und einer durchmessergroßen Gebrauchslage, dass im Eintauchhub (N) die Entgratschneide (13) in ihre durchmesserkleine Nichtgebrauchslage verstellt ist, und dass im Entgrathub (A) die Entgratschneide (13) in ihre durchmessergroße Gebrauchslage verstellt ist, in der die werkzeugabgewandte Bohrungsmündung (45) entgratet wird.

3. Verfahren nach einem der vorhergehenden Ansprüche, **dadurch gekennzeichnet, dass** am Ende des Eintauchhubs (N) das Entgratwerkzeug (9) um einen Radialversatz ausgesteuert wird, so dass im folgenden Entgrathub (A) die Entgratschneide (13) in einer Zirkularbewegung um die Bohrungsachse (B) geführt wird, damit die Entgratschneide (13) die werkzeugabgewandte Bohrungsmündung (45) entgraten kann, und/oder dass im Eintauchhub (N) die Entgratschneide (13) in Spaneingriff mit der Bohrungswand (47) der Werkstück-Durchgangsbohrung (7) ist, und/oder dass im Eintauchhub (N) die Entgratschneide (13) eine Nut (29) in der Bohrungswand (47) der Werkstück-Durchgangsbohrung (7) erzeugt, und zwar mit Nutauslauf (51) an der werkzeugabgewandten Bohrungsmündung (45), und dass insbesondere im Eintauchhub (N) das Entgratwerkzeug (9) in Richtung werkzeugabgewandte Bohrungsmündung (45) mit einem Nuterzeugungs-Vorschub (f_{N}) und mit einer damit synchronisierten Nuterzeugungs-Drehzahl (n_{N}) in die Werkstück-Durchgangsbohrung (7) eingetrieben wird, und dass die Nut (29) eine schraubenlinienförmige Helixnut ist.

4. Verfahren nach einem der vorhergehenden Ansprüche, **dadurch gekennzeichnet, dass** sich an den Entgrathub (E) ein Aufbohrhub (A) anschließt, in dem die Entgratschneide (13) die Werkstück-Durchgangsbohrung (7) bis auf einen Fertigdurchmesser (d_{F}) aufbohrt, und dass insbesondere ein Außendurchmesser der Nut (29) dem Fertigdurchmesser (d_{F}) der Durchgangsbohrung (7) entspricht, und/oder dass nach Abschluss des Aufbohrhubs (A) die Durchgangsbohrung (7) eine nutfreie, glattzylindrische Bohrungswand (47) aufweist, und/oder dass im Eintauchhub (N) das Entgratwerkzeug (9) mit seiner Entgratschneide (13) über die werkzeugabgewandte Bohrungsmündung (45) hinaus bis zu einem Umkehrpunkt (U) bewegt wird, und dass insbesondere im Umkehrpunkt (U) die Entgratschneide (13) belastungsfrei ist, und dass anschließend der Entgrathub (E) startet, und dass insbesondere die Entgratschneide (13) erst dann belastungsfrei wird, nachdem sich die Entgratschneide (13) im Eintauchhub (N) an der werkzeugabgewandten Bohrungsmündung (45) freigeschnitten hat.

5. Verfahren nach einem der vorhergehenden Ansprüche, **dadurch gekennzeichnet, dass** das Entgratwerkzeug (9) im Eintauchhub (N), im Entgrathub (E) und/oder im Aufbohrhub (A) koaxial zur Bohrungsachse (B) ist, und/oder dass die Drehrichtungen im Eintauchhub (N) und im Entgrat- oder Aufbohrhub (E, A) identisch sind, und/oder dass die werkzeugabgewandte Bohrungsmündung (45) in einer Werkstückebene (W) liegt, die mit Bezug auf die Bohrungsachse (B) um einen Verschnittwinkel (γ) schräggestellt ist, so dass die Bohrungsmündung (45) zwischen einer axial vorragenden Scheitelstelle (S1) und einer axial zurückgesetzten Scheitelstelle (S2) ellipsenförmig verläuft, und dass an der axial vorragenden Scheitelstelle (S1) ein Randbereich der Bohrungsmündung (45) mit der Bohrungswand (47) einen stumpfen Materialwinkel (a) größer als 90° aufspannt, so dass an der axial vorragenden Scheitelstelle (S1) ausreichend tragendes Werkstück-Material bereitgestellt ist, damit es an der Scheitelstelle (S1) zu keiner Gratbildung kommt, und dass insbesondere der Nutauslauf (51) der Nut (29) im Bereich der axial vorragenden Scheitelstelle (S1) positioniert ist, an der es zu keiner Gratbildung kommt.

6. Verfahren nach einem der vorhergehenden Ansprüche, **dadurch gekennzeichnet, dass** vor dem Entgrat-Prozess ein Vorbohr-Prozess erfolgt, bei dem ein Bohrwerkzeug in das Werkstück (2) eingetrieben wird, und zwar unter Bildung einer Vorbohrung (6), deren Durchmesser (dv) kleiner als der Fertigdurchmesser (d_{F}) ist, und dass im Vorbohr-Prozess auf der werkzeugabgewandten Bohrungsmündung (45) sich der Grat (14) bildet, und/oder dass die Entgratschneide (13) an der Werkzeugspitze (11) angeordnet ist, und/oder dass die Entgratschneide (13) eine in Axialrichtung verlaufende Längs-Schneidkante (15), die den Nutgrund (27) der Nut (29) erzeugt, aufweist, und/oder dass die Längs-Schneidkante (15) an einer stirnseitigen Schneidenecke (17) in eine stirnseitige Quer-Schneidkante (19) übergeht und an einer schaftseitigen Schneidenecke (23) in eine schaftseitige Quer-Schneidkante (25) übergeht, die die Nutflanken (31) der Nut (29) erzeugen, und dass insbesondere die Längs-Schneidkante (15), die stirnseitige Schneidenecke (17) und die schaftseitige Schneidenecke (23) der Entgratschneide (13) auf dem Fertigdurchmesser (d_{F}) liegen, und dass insbesondere die schaftseitige Quer-Schneidkante (25) der Entgratschneide (13) im Entgrathub (E) die Entgratung der werkzeugabgewandten Bohrungsmündung (45) bewirkt.

7. Verfahren nach einem der vorhergehenden Ansprüche, **dadurch gekennzeichnet, dass** das Entgratwerkzeug (9) zumindest eine Schälschneide (33) aufweist, mittels der bereits im Eintauchhub (N) die Werkstück-Durchgangsbohrung (7) bis auf den Fertigdurchmesser (d_{F}) aufgebohrt wird, und dass insbesondere die Schälschneide (33) in Axialrichtung mit Abstand (a) zur Entgratschneide (13) angeordnet ist, und zwar bevorzugt unter Zwischenlage eines durchmesserreduzierten Spanraums (35), über den Späne abtransportiert werden können, und dass insbesondere der Schälschneide (33) in der Werkzeug-Drehrichtung eine Spannut (43) vorgelagert ist, und dass sich die Spannut (43) in Axialrichtung erstreckt und/oder insbesondere in den Spanraum (35) einmündet, und/oder dass die axiale Kantenlänge (l₁) der Schälschneide (33) wesentlich länger bemessen als die axiale Kantenlänge (l₂) der der Entgratschneide (13).

8. Verfahren nach einem Anspruch 7, **dadurch gekennzeichnet, dass** die Schälschneide (33) eine sich axial erstreckende Längs-Schneidkante (37) aufweist, die auf dem Fertigdurchmesser (d_{F}) liegt, und dass die Längs-Schneidkante (37) an einer stirnseitigen Schneidenecke (39) in eine Quer-Schneidkante (41) übergeht.

9. Verfahren nach einem der Ansprüche 4 bis 8, **dadurch gekennzeichnet, dass** im Umkehrpunkt (U) die Schälschneide (33) bohrungsinnen mit Axialversatz (v) zur werkzeugabgewandten Bohrungsmündung (45) verbleibt.

10. Entgratwerkzeug zur Durchführung eines Entgrat-Prozesses in einem Verfahren nach einem der vorhergehenden Ansprüche.
